# EUROPEAN PATENT SPECIFICATION

(11) **EP 3 428 136 B1**
(45) Date of publication and mention of the grant of the patent: **01.04.2020**
(21) Application number: 17181554.1
(22) Date of filing: 14.07.2017
(51) Int. Cl.: C04B 35/48, C04B 35/486, C04B 35/488, C04B 35/626, C04B 35/78, C04B 35/80, C04B 38/00, F01D 5/00, F01D 5/28

(54) **HIGH TEMPERATURE THERMAL INSULATION MATERIAL, PARTICULARLY FOR GAS TURBINE, AND MANUFACTURING METHOD THEREOF**
HOCHTEMPERATURISOLIERMATERIAL, INSBESONDERE FÜR GASTURBINEN, UND HERSTELLUNGSVERFAHREN DAFÜR
MATÉRIAU D'ISOLATION THERMIQUE À HAUTE TEMPÉRATURE, EN PARTICULIER POUR TURBINE À GAZ ET SON PROCÉDÉ DE FABRICATION

(43) Date of publication of application: 16.01.2019
(73) Proprietor: Ansaldo Energia IP UK Limited, London W1G 9DQ (GB)
(72) Inventor: BOSSMANN, Hans-Peter, 79787 LAUCHRINGEN (DE); RENUSCH, Daniel, 5400 BADEN (CH); CHU, Tsu-Te, 6004 LUZERN (CH); MICHALEK, Martin, 8600 DÜBENDORF (CH); KUEBLER, Jakob, 8535 HERDERN (CH)
(74) Representative: Cernuzzi, Daniele

(56) References cited:
- EP-A1- 1 588 992
- EP-A2- 1 550 645
- EP-A2- 2 275 645
- WO-A2-2013/103425
- US-A- 5 173 331
- US-A1- 2005 064 245
- US-A1- 2005 112 389
- US-A1- 2012 177 836
- US-B1- 6 352 788
- US-B1- 6 858 334
- US-B1- 6 875 529

## Description

### FIELD OF THE INVENTION

The present invention relates to a high temperature thermal insulation material, particularly for gas turbine components, and to the manufacturing method thereof.

In particular, the invention relates to a material which is suitable to replace the current thermal barrier coatings (TBCs) .

### DESCRIPTION OF PRIOR ART

In many technical fields, for example in the gas turbine field, it is well known the need for an effective thermal protection of components/surfaces operating at very high temperatures.

In particular, in a gas turbine, internal components are exposed to a particularly aggressive environment, which subjects the components to high levels of stress, not only thermal but also corrosive and mechanical.

According to a common approach, gas turbine components are made of specially designed metal alloys (for example, so-called superalloys) having surfaces protected by thermal barrier coatings (TBC).

Such coatings insulate components by means of thermally insulating materials which can sustain a significant temperature difference between the load-bearing metal surface and the coating surface.

For example, thermal barrier coatings are known which are made of partially stabilized zirconia ceramics.

However, also with such coatings there are limitations with regard to the range of high temperature applications; moreover, the manufacturing of coated components is rather complicated and expensive; and coatings inevitably add parasitic weight to the components, which is undesirable in particular for rotating/moving components.

Thus, due to increasing demand for higher temperature operation (efficiency increases at higher temperatures), better durability/lifetime, less expensive and more efficient components, there is great motivation to replace TBC with different kinds of thermal protection systems.

Another known approach is based on the use of ceramic materials, for example in the form of covering tiles.

However, even if ceramic materials are known to generally have low thermal conductivity, the currently available materials still have room for improvements, in particular in order to increase operation temperatures, reduce thermal conductivity, extend expected lifetime, increase resistance to mechanical and chemical stress.

### DISCLOSURE OF THE INVENTION

Accordingly, it is an object of the present invention to provide a high temperature thermal insulation material, and the manufacturing method thereof, suitable for overcoming the problem foregoing described of the prior art.

In particular, it is an object of the present invention to provide a material having improved properties and performances compared with traditional ceramics, so as to be suitable to replace traditional TBCs, in particular in gas turbine components.

The present invention accordingly relates to a high temperature thermal insulation material as defined in Claim 1, and to a method of manufacturing a high thermal insulation material as defined in Claim 11.

Advantageous preferred features of the invention are the subject matter of the dependent claims.

Basically, the invention provides an improved high temperature thermal insulation material, particularly suitable for thermal protection of gas turbine components, comprising a base YSZ ceramic matrix having a porous microstructure and hafnia particles dispersed therein; hafnia particles are incorporated within the porous ceramic matrix in form of aggregated clusters.

(As well known: zirconia is zirconium oxide, ZrO₂; yttria is yttrium oxide, Y₂O₃; hafnia is hafnium(IV) oxide, i.e. hafnium dioxide, HfO₂).

The base ceramic matrix consists of yttria-stabilized zirconia, in particular a fully stabilized YSZ.

Advantageously, the yttria-stabilized zirconia is a fully stabilized yttria-stabilized zirconia, having a content of yttria ranging between 8 and 14 wt.%.

According to the invention, hafnia particles are not incorporated for the purpose of improving the mechanical properties of the ceramic material, but to increase the capability of sustaining higher operating temperatures and decreasing the thermal conductivity of the final product.

Therefore, hafnia is advantageously added to the ceramic matrix in the form of clusters, i.e. fine hafnia particles are aggregated/agglomerated together to form larger clusters. Hafnia clusters are randomly distributed in the ceramic matrix.

Agglomerated hafnia clusters, having a diameter of about 1 to 30 µm, preferably of about 5 to 20 µm, more preferably from 5 to 10 µm, cause the mechanical resistance of the composite material to decrease, but, on the other hand, the randomly distributed clusters increase the ability to sustain temperature up to about 1600°C with several thermal cycles without critical or destructive crack propagation. Micro-cracks which form during the sintering process around the hafnia grains are deemed to be the main reason for dissipation of the thermal stresses occurring during heating and cooling.

Advantageously, the materials of the invention contain hafnia clusters in an amount of about 0.1 to 10 vol.%, preferably 0.5 to 5.0 vol.% (with respect to the volume of the YSZ ceramic matrix).

The pore forming agent addition results in a porous microstructure having 10 to 40 vol.% (preferably 20 vol.%) of fine pores having a diameter from 1 to 10 µm.

The pore forming agent, preferably having spherical particles so as to produce spherical pores, is for example Poly (Methyl Methacrylate) - PMMA in form of spheres.

The pore forming agent is added mainly to increase the isolation features of the material.

However, both the dispersion of aggregated hafnia clusters and the porous structure (imparted by addition of the pore forming agent) contribute synergistically to the characteristic of the materials of the invention and interact with each other to provide the improved capability of sustaining higher operation temperatures, even in aggressive (e.g. oxidizing) atmosphere and subjected to rapid thermal cycling.

In some embodiments, the YSZ ceramic matrix also contains a dispersion of non-aggregated fine powder particles of at least one high temperature resistant inorganic powder, in particular hafnia fine particles.

In particular, fine hafnia particles are added in an amount from 1 to 10 vol.% (preferably 2 to 6 vol.%) and with a diameter from 0.1 to 10 µm (preferably from 0.3 to 1.0 µm), in order to provide a toughening effect and a high thermal stability (up to 1600°C).

Incorporation of fine sized hafnia particles (preferably having dimensions, in particular diameter, smaller than the hafnia clusters incorporated in the ceramic matrix) has an effect which is similar to that of e.g. zirconia in zirconia-toughened alumina (ZTA). In fact, hafnia has a similar behaviour in respect to zirconia, although the temperature of the transformation is shifted to higher regions.

The dispersion of fine hafnia particles can be partly or fully replaced by a dispersion of one or more other high temperature resistant inorganic powders, such as Al₂O₃ or V₂O₅.

The present invention thus provides materials having, when compared with already known ceramic for gas turbine operation conditions, higher operation temperature ability and enhanced thermal cycling resistance.

Basically, the generally low thermal conductivity and high strength of known ceramic materials are improved by including micropores and fine inorganic powders having good thermal stability into a high temperature ceramic matrix. With respect to known ceramic materials, modification according to the invention leads to materials with a lower thermal conductivity and an improved capability of sustaining higher operation temperatures, even in aggressive (e.g. oxidizing) atmosphere and subjected to rapid thermal cycling.

Thus, the materials of the invention are fully suitable for use in conditions where both thermal stress resistance and mechanical strength are required, such as in gas turbines, and can effectively replace traditional TBC.

The invention materials can be used, for example, to achieve higher firing temperatures and improved turbine efficiency.

For example, the materials of the invention can be used to make tiles having improved performances over known type ceramic tiles, such as tiles made of ceramic matrix composites (CMC, consisting of ceramic fibres embedded in a ceramic matrix).

The materials of the invention are advantageously prepared by a method comprising the following steps:
a) preparation of a homogenous powder mixture including:
   - yttria-stabilized zirconia (YSZ) powder;
   - hafnia (HfO₂) powder comprising clusters of aggregated particles of hafnia as described in present claim 11;
   - at least one pore forming agent;
   - at least one solvent;
b) heat-treatment of the mixture to produce a porous ceramic matrix of yttria-stabilized zirconia having a porous microstructure and containing the hafnia clusters embedded and dispersed within the porous ceramic matrix.

In particular, the homogeneous powder mixture is prepared by milling.

Preferably, the yttria-stabilized zirconia is a fully yttria-stabilized zirconia, having a content of yttria ranging between 8 and 14 wt.%.

Hafnia clusters, which are made of aggregated hafnia particles and are randomly distributed in the ceramic matrix, are added in an amount ranging between 0.1 and 10.0 vol.%, preferably between 0.5 to 5 vol.%; and have a diameter of about 1 to 30 µm, preferably of about 5 to 20 µm, more preferably of about 5 to 10 µm.

Advantageously, the pore forming agent is shaped in the form of spherical microbeads having an average diameter ranging between about 1 and 10 µm.

The pore forming agent is preferably added in an amount ranging between 10 and 40 vol.%.

The pore forming agent is, for example, PMMA.

In some embodiments, the powder mixture also contains non-aggregated fine powder particles of at least one high temperature resistant inorganic powder, in particular hafnia fine particles, or Al₂O₃ or V₂O₅ fine particles.

In particular, fine hafnia particles are added in an amount from 1 to 10 vol.% (preferably 2 to 6 vol.%) and with a diameter from 0.1 to 10 µm (preferably from 0.3 to 1.0 µm).

After the milling step, the method of the invention further comprises:
- a drying step, in particular a vacuum drying step,
- a pressing step, in particular a uniaxial die pressing step,
- a burn-out step,
- a sintering step.

### BRIEF DESCRIPTION OF DRAWINGS

The invention is further described by way of example in the following non-limiting embodiments, with reference to the accompanying drawings in which:
- Figure 1 is a micro-photograph showing the microstructure of a material according to the invention;
- Figure 2 is a higher magnification micro-photograph of a detail of the material of Figure 1, showing in particular some hafnia clusters with cracks around hafnia grains (circled regions);
- Figure 3 is a diagram showing the thermal expansion in composite materials according to the invention and containing 2 and 5 vol.% respectively of hafnia in the YSZ matrix and having a porosity of 20 vol.%, in comparison with the same base YSZ with the same porosity content (20 vol.%) but no hafnia;
- Figure 4 shows the flexural strength (measured by a four-point bending strength method) of samples of materials of the invention, containing 2 and 5 vol.% respectively of coarse hafnia particles (square), and a material containing 2 vol.% of fine-grained hafnia particles (dot).

### DETAILED DESCRIPTION OF PREFERRED EMBODIMENTS OF THE INVENTION

As previously described, the material according to the invention is a composite material comprising a ceramic matrix of fully stabilized zirconia, in particular fully yttria-stabilized zirconia (YSZ), in which agglomerated hafnia particles are dispersed, and having a porous structure of fine pores (with predetermined sizes), obtained by addition of at least one pore forming agent.

Advantageously, the hafnia particles are agglomerated particles, i.e. particles aggregated together in clusters of particles. The clusters are evenly dispersed in the ceramic matrix.

Optionally, the material also includes fine sized particles of hafnia (or another similar high-temperature resistant inorganic powder).

The ceramic composite of the invention can be prepared, for example, by a manufacturing process of the general type commonly used for manufacturing ceramic materials, in particular a dry process including a pressureless sintering step followed by a uniaxial die pressing step.

In more details, exemplary embodiments of materials according to the invention are prepared as follows.

A powder mixture is first prepared, comprising:
- yttria-stabilized zirconia (YSZ);
- hafnia (HfO₂) ;
- a pore forming agent, in particular PMMA;
- a solvent (e.g. isopropanol).

In particular, YSZ is a fully yttria-stabilized zirconia, having a content of yttria ranging between 8 and 14 wt.% (i.e. the weight fraction of yttria is 8 to 14 % of the whole mixture); and a density ranging between 4 and 8 gcm⁻³, preferably between 5 and 7 gcm⁻³.

For example, the materials of the invention contain a commercial YSZ supplied by Tosoh Europe B.V. and identified as "TZ-8YS", which is a fully stabilized, easy-mouldability-grade zirconia having a density of 5.9 gcm⁻³ and containing 8 mol% of yttria.

Hafnia is added to the powder mixture in the form of clusters of aggregated particles.

Preferably, hafnia added to the powder mixture is substantially pure; in particular, hafnia has a purity higher than 98%, more preferably higher than 99% and in particular higher than 99.90%.

For example, hafnia having a purity of 99,95% is used, having a typical density of about 9.68 gcm⁻³.

Hafnia clusters are added to the YSZ ceramic matrix in an amount preferably ranging between 0.1 and 10.0 vol.%, more preferably between 0.5 to 5 vol.%, with respect to the volume of zirconia.

Solid PMMA, for example a PMMA having a density of about 1.2 gcm⁻³, is used as a pore forming agent in the form of particles; in particular, PMMA is shaped in the form of microbeads, preferably of spherical shape. For example, PMMA consists of substantially spherical particles having an average diameter ranging between about 1 and 10 µm and preferably around 6 µm. For example a PMMA6, having a particle diameter of about 6 µm, is used.

However, another pore forming agent can replace PMMA, for example another suitable equivalent polymer.

The pore forming agent, e.g. PMMA, is added in an amount preferably ranging between 10 and 30 vol.%, more preferably between 15 and 25 vol.%, for example of about 20 vol.%.

The powder mixture is then milled, for example in a PVC jar and using zirconia balls (for example, having a diameter of about 3 mm).

The homogeneous powder mixture of ceramic (YSZ matrix with a dispersion of hafnia clusters) and pore forming agent particles (e.g. PMMA) is an intermediate product suitable for powder or slurry production of ceramic materials.

For example, the mixture is subjected to:
- a vacuum drying step,
- a uniaxial die pressing step,
- a burn-out step,
- a sintering step.

For example, the burn-out step is performed by heating the material (increasing the temperature at a rate of about 1°C/min) up to 950°C, and by maintaining such a temperature for 5 hours.

After a cooling step (to room temperature), the material is subjected to the sintering step, performed for example by heating the material (increasing the temperature at a rate of about 4°C/min) up to 1600°C and by maintaining the temperature of 1600°C for 1 hour; then, the material is cooled to 1000°C at a rate of 1.5°C/min; and then cooled to room temperature at a rate of 10°C/min.

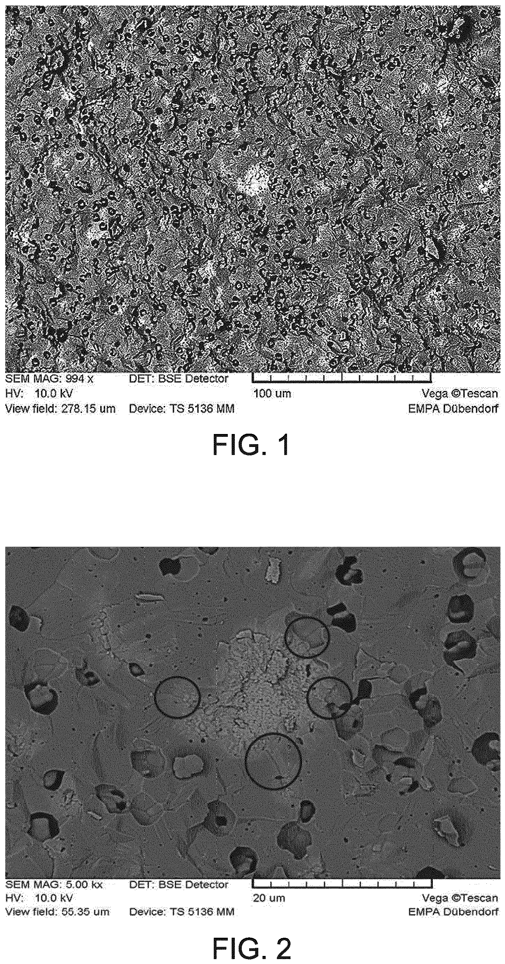

The microstructure of an exemplary embodiment of a composite ceramic material comprising 5 vol.% HfO₂ in a YSZ ceramic matrix (in particular, 14YSZ), with a porosity of 20 vol.% (produced by a corresponding amount of PMMA6) is shown in Figure 1.

The higher magnification picture of Figure 2 shows in particular the hafnia clusters in the ceramic matrix, with cracks around the hafnia grains (circled regions).

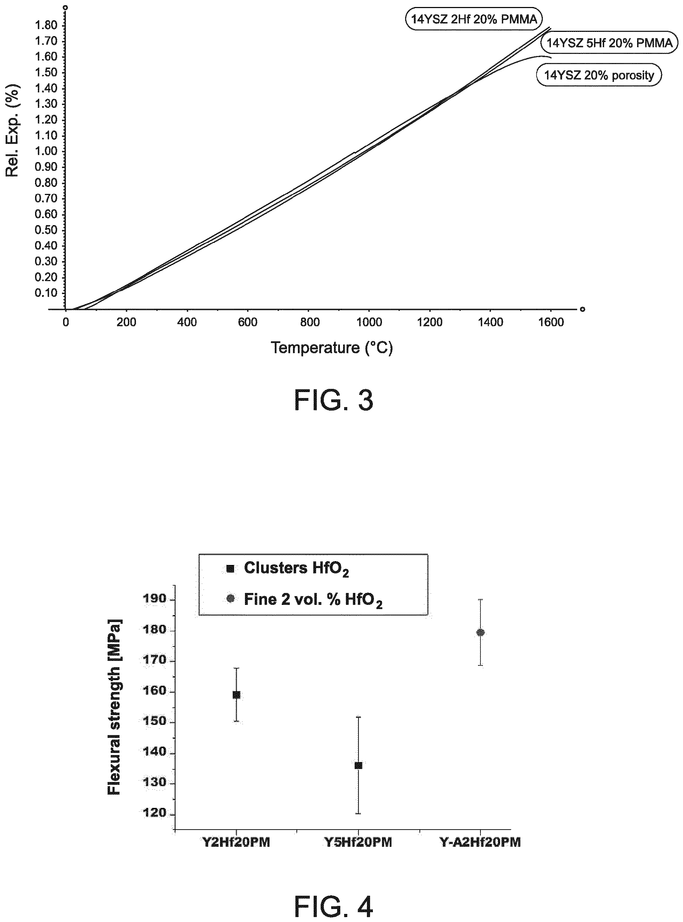

Figure 3 shows the thermal expansion in composite materials according to the invention and containing 2 vol.% and 5 vol.% respectively of hafnia in the YSZ matrix, in comparison with a YSZ having the same porosity content (20 vol.%) but no hafnia.

Figure 4 shows the flexural strength (measured by a four-point bending strength method) on samples of the invention, containing 2 and 5 vol.% respectively of coarse hafnia particles and having a porosity of 20 vol.% (square dots), in comparison with a material containing 2 vol.% of fine-grained hafnia particles and having the same porosity level (round dot).

Finally, although the invention has been explained in relation to the above-mentioned preferred embodiments, it is to be understood that many other possible modifications and variations can be made without departing from the scope of the appended claims.

## Claims

1. High temperature thermal insulation material, in particular for gas turbine components, comprising a porous ceramic matrix of yttria-stabilized zirconia (YSZ) having a porous microstructure; and hafnia (HfO₂) particles incorporated within the porous ceramic matrix in form of aggregated clusters; wherein hafnia clusters are made of aggregated hafnia particles and are randomly distributed in the ceramic matrix and have a diameter of about 1 to 30 µm.

2. Material according to Claim 1, wherein hafnia clusters have a diameter of about 5 to 20 pm, more preferably of about 5 to 10 µm.

3. Material according to any one of the preceding Claims, having a content of hafnia clusters ranging between about 0.1 and 10 vol.%, preferably between about 0.5 and 5.0 vol.%.

4. Material according to any one of the preceding Claims, having a porous microstructure with 10 to 40 vol.% pores.

5. Material according to any one of the preceding Claims, wherein said yttria-stabilized zirconia is a fully yttria-stabilized zirconia, having a content of yttria ranging between 8 and 14 wt.%.

6. Material according to any one of the preceding Claims, having pores which are substantially spherical pores having a diameter ranging about between 1 and 10 µm.

7. Material according to one of the preceding Claims, wherein the YSZ ceramic matrix also contains a dispersion of non-aggregated fine powder particles of at least one high temperature resistant inorganic powder, in particular hafnia fine particles.

8. Material according to Claim 7, wherein the fine powder particles have a diameter ranging between about 0.1 and 10 pm, preferably between about 0.3 and 1.0 µm.

9. Material according to Claim 7 or 8, wherein the fine powder particles include one or more of HfO₂, Al₂O₃, V₂O₅.

10. Material according to one of Claims 7 to 9, containing fine powder particles in an amount of about 1 to 10 vol.%.

11. Method of manufacturing a high thermal insulation material, in particular for gas turbine components, comprising the steps of:
a) preparing an homogenous powder mixture comprising:
- yttria-stabilized zirconia (YSZ) powder;
- hafnia (HfO₂) powder comprising clusters of aggregated particles of hafnia; wherein hafnia clusters are made of aggregated hafnia particles and are randomly distributed in the ceramic matrix and have a diameter of about 1 to 30 pm;
- at least one pore forming agent;
- at least one solvent;
b) heat-treating the mixture to produce a porous ceramic matrix of yttria-stabilized zirconia having a porous microstructure and containing the hafnia clusters embedded and dispersed within the porous ceramic matrix.

12. Method according to Claim 11, wherein the homogeneous powder mixture is prepared by milling.

13. Method according to Claim 11 or 12, wherein hafnia clusters are added in an amount ranging between 0.1 and 10.0 vol.%, preferably between 0.5 to 5 vol.%.

14. Method according to one of Claim 11 to 13, wherein hafnia clusters have a diameter of about 5 to 20 pm, more preferably of about 5 to 10 µm.

15. Method according to one of Claim 11 to 14, wherein the pore forming agent is PMMA.

16. Method according to one of Claim 11 to 15, wherein the pore forming agent is shaped in the form of spherical microbeads having an average diameter ranging between about 1 and 10 µm.

17. Method according to one of Claim 11 to 16, wherein the pore forming agent is added in an amount ranging between 10 and 40 vol.%.

18. Method according to one of Claim 11 to 17, wherein said yttria-stabilized zirconia is a fully yttria-stabilized zirconia, having a content of yttria ranging between 8 and 14 wt.%.

19. Method according to one of Claim 11 to 18, wherein the powder mixture also contains non-aggregated fine powder particles of at least one high temperature resistant inorganic powder, in particular hafnia fine particles.

20. Method according to Claim 19, wherein the fine powder particles have a diameter ranging between about 0.1 and 10 pm, preferably between about 0.3 and 1.0 µm.

21. Method according to Claim 19 or 20, wherein the fine powder particles include one or more of HfO₂, Al₂O₃, V₂O₅.

22. Method according to one of Claims 19 to 21, containing fine powder particles in an amount of about 1 to 10 vol.%.

23. Method according to one of Claim 11 to 22, comprising, after the milling step:
- a drying step, in particular a vacuum drying step;
- a pressing step, in particular a uniaxial die pressing step;
- a burn-out step;
- a sintering step.

## Patentansprüche

1. Hochtemperatur-Wärmeisoliermaterial, insbesondere für Gasturbinenbauteile, umfassend eine poröse Keramikmatrix aus Yttriumoxid-stabilisiertem Zirkonoxid (YSZ) mit einer porösen Mikrostruktur; und Teilchen aus Hafniumoxid (HfO₂), die in der porösen Keramikmatrix in Form von aggregierten Ansammlungen eingebunden sind; wobei die Hafniumoxid-Ansammlungen aus aggregierten Hafniumoxid-Teilchen gebildet sind und in der Keramikmatrix zufällig verteilt sind und einen Durchmesser von etwa 1 bis 30 µm haben.

2. Material nach Anspruch 1, wobei die Hafniumoxid-Ansammlungen einen Durchmesser von etwa 5 bis 20 pm, mehr bevorzugt von etwa 5 bis 10 µm aufweisen.

3. Material nach einem der vorangehenden Ansprüche, mit einem Gehalt an Hafniumoxid-Ansammlungen im Bereich zwischen etwa 0,1 und 10 Vol.-%, vorzugsweise zwischen etwa 0,5 und 5,0 Vol.-%.

4. Material nach einem der vorangehenden Ansprüche, mit einer porösen Mikrostruktur mit 10 bis 40 Vol.-% an Poren.

5. Material nach einem der vorangehenden Ansprüche, wobei das Yttriumoxid-stabilisierte Zirkonoxid ein vollständig Yttriumoxid-stabilisiertes Zirkonoxid mit einem Yttriumoxid-Gehalt im Bereich zwischen 8 und 14 Gew.-% ist.

6. Material nach einem der vorangehenden Ansprüche, mit Poren, die im wesentlichen kugelförmige Poren mit einem Durchmesser im Bereich zwischen etwa 1 und 10 µm sind.

7. Material nach einem der vorangehenden Ansprüche, wobei die YSZ-Keramikmatrix auch eine Dispersion von nichtaggregierten feinen Pulverteilchen von wenigstens einem hochtemperaturbeständigen anorganischen Pulver, insbesondere Hafniumoxid-Feinteilchen, enthält.

8. Material nach Anspruch 7, wobei die feinen Pulverteilchen einen Durchmesser im Bereich zwischen etwa 0,1 und 10 pm, vorzugsweise zwischen etwa 0,3 und 1,0 pm, haben.

9. Material nach Anspruch 7 oder 8, wobei die feinen Pulverteilchen HfO₂ und/oder Al₂O₃ und/oder V₂O₅ enthalten.

10. Material nach einem der Ansprüche 7 bis 9, das feine Pulverteilchen in einer Menge von etwa 1 bis 10 Vol.-% enthält.

11. Verfahren zur Herstellung eines hochwärmeisolierenden Materials, insbesondere für Gasturbinenbauteile, die folgenden Schritte umfassend:
a) Herstellung eines homogenen Pulvergemischs, umfassend:
- Pulver aus Yttriumoxid-stabilisiertem Zirkonoxid (YSZ);
- Pulver aus Hafniumoxid (HfO₂), das Ansammlungen von aggregierten Hafniumoxid-Teilchen umfasst; wobei die Hafniumoxid-Ansammlungen aus aggregierten Hafniumoxid-Teilchen gebildet sind und in der Keramikmatrix zufällig verteilt sind und einen Durchmesser von etwa 1 bis 30 µm haben;
- wenigstens ein porenbildendes Mittel;
- wenigstens ein Lösungsmittel;
b) Wärmebehandeln des Gemischs, um eine poröse Keramikmatrix aus Yttriumoxid-stabilisiertem Zirkonoxid herzustellen, die eine poröse Mikrostruktur aufweist und Hafnium-Ansammlungen enthält, die in der porösen Keramikmatrix eingebettet und dispergiert sind.

12. Verfahren nach Anspruch 11, wobei das homogene Pulvergemisch durch Mahlen hergestellt wird.

13. Verfahren nach Anspruch 11 oder 12, wobei die Hafnium-Ansammlungen in einer Menge zwischen 0,1 und 10,0 Vol.-%, vorzugsweise zwischen 0,5 und 5 Vol.-%, zugegeben werden.

14. Verfahren nach einem der Ansprüche 11 bis 13, wobei die Hafniumoxid-Ansammlungen einen Durchmesser von etwa 5 bis 20 pm, mehr bevorzugt von etwa 5 bis 10 pm, haben.

15. Verfahren nach einem der Ansprüche 11 bis 14, wobei das porenbildende Mittel PMMA ist.

16. Verfahren nach einem der Ansprüche 11 bis 15, wobei das porenbildende Mittel in Form von kugelförmigen Mikroperlen mit einem mittleren Durchmesser im Bereich zwischen etwa 1 und 10 µm geformt ist.

17. Verfahren nach einem der Ansprüche 11 bis 16, wobei das das porenbildende Mittel in einer Menge im Bereich zwischen 10 und 40 Vol.-% zugegeben wird.

18. Verfahren nach einem der Ansprüche 11 bis 17, wobei das Yttriumoxid-stabilisierte Zirkonoxid ein vollständig Yttriumoxid-stabilisiertes Zirkonoxid ist, das einen Yttriumoxid-Gehalt im Bereich zwischen 8 und 14 Gew.-% aufweist.

19. Verfahren nach einem der Ansprüche 11 bis 18, wobei das Pulvergemisch auch nicht-aggregierte feine Pulverteilchen von wenigstens einem hochtemperaturbeständigen anorganischen Pulver, insbesondere Hafniumoxid-Feinteilchen, enthält.

20. Verfahren nach Anspruch 19, wobei die feinen Pulverteilchen einen Durchmesser im Bereich zwischen etwa 0,1 und 10 µm, vorzugsweise zwischen etwa 0,3 und 1,0 µm, aufweisen.

21. Verfahren nach Anspruch 19 oder 20, wobei die feinen Pulverteilchen HfO₂ und/oder Al₂O₃ und/oder V₂O₅ enthalten.

22. Verfahren nach einem der Ansprüche 19 bis 21, wobei die feinen Pulverteilchen in einer Menge von etwa 1 bis 10 Vol.-% enthalten sind.

23. Verfahren nach einem der Ansprüche 11 bis 22, nach dem Mahlschritt umfassend:
- einen Trocknungsschritt, insbesondere einen Vakuumtrocknungsschritt;
- einen Pressschritt, insbesondere einen uniaxialen Stempelpressschritt;
- einen Ausbrennschritt;
- einen Sinterschritt.

## Revendications

1. Matériau d'isolation thermique à haute température, destiné en particulier à des composants de turbine à gaz, comprenant une matrice céramique poreuse de zircone stabilisée par yttria (YSZ) présentant une microstructure poreuse ; et des particules d'hafnie (HfO₂) incorporées dans la matrice céramique poreuse sous la forme d'agrégats ; où les agrégats d'hafnie sont constitués de particules d'hafnie agrégées, et sont répartis de manière aléatoire dans la matrice céramique, et présentent un diamètre compris entre 1 et 30 µm environ.

2. Matériau selon la revendication 1, où les agrégats d'hafnie présentent un diamètre compris entre 5 et 20 µm environ, mieux entre 5 et 10 µm environ.

3. Matériau selon l'une quelconque des revendications précédentes, présentant une teneur en agrégats d'hafnie comprise entre 0,1 et 10 % en volume environ, de préférence entre 0,5 et 5,0 % en volume environ.

4. Matériau selon l'une quelconque des revendications précédentes, présentant une microstructure poreuse avec entre 10 et 40 % en volume de pores.

5. Matériau selon l'une quelconque des revendications précédentes, où ladite zircone stabilisée par yttria est une zircone entièrement stabilisée par yttria, présentant une teneur en yttria comprise entre 8 et 14 % en poids.

6. Matériau selon l'une quelconque des revendications précédentes, présentant des pores qui sont des pores sensiblement sphériques présentant un diamètre compris entre 1 et 10 µm environ.

7. Matériau selon l'une quelconque des revendications précédentes, où la matrice céramique de YSZ contient également une dispersion de particules pulvérulentes fines non agrégées constituées au moins d'une poudre inorganique résistante aux hautes températures, en particulier de particules fines d'hafnie.

8. Matériau selon la revendication 7, où les particules pulvérulentes fines présentent un diamètre compris entre 0,1 et 10 µm environ, de préférence compris entre 0,3 et 1,0 µm environ.

9. Matériau selon la revendication 7 ou 8, où les particules pulvérulentes fines comprennent un ou plusieurs des éléments HfO₂, Al₂O₃, V₂O₅.

10. Matériau selon l'une quelconque des revendications 7 à 9, contenant des particules pulvérulentes fines en une quantité comprise entre 1 et 10 % environ en volume.

11. Procédé destiné à fabriquer un matériau d'isolation thermique à haute température, destiné en particulier à des composants de turbine à gaz, comprenant les étapes suivantes :
a) préparer un mélange pulvérulent homogène comprenant :
- une poudre de zircone stabilisée par yttria (YSZ) ;
- une poudre d'hafnie (HfO₂) comprenant des agrégats de particules d'hafnie; où les agrégats d'hafnie sont constitués de particules d'hafnie agrégées, et sont répartis de manière aléatoire dans la matrice céramique, et présentent un diamètre compris entre 1 et 30 µm environ ;
- au moins un agent de formation de pores ;
- au moins un solvant ;
b) traiter par la chaleur le mélange afin de produire une matrice céramique poreuse de zircone stabilisée par yttria présentant une microstructure poreuse, et contenant les agrégats d'hafnie enfouis et dispersés dans la matrice céramique poreuse.

12. Procédé selon la revendication 11, où le mélange pulvérulent homogène est préparé par broyage.

13. Procédé selon la revendication 11 ou 12, où les agrégats d'hafnie sont ajoutés en une quantité comprise entre 0,1 et 10,0 % en volume, de préférence entre 0,5 et 5 % en volume.

14. Procédé selon l'une quelconque des revendications 11 à 13, où les agrégats d'hafnie présentent un diamètre compris entre 5 et 20 µm environ, mieux entre 5 et 10 µm environ.

15. Procédé selon l'une quelconque des revendications 11 à 14, où l'agent de formation de pores est un PMMA.

16. Procédé selon l'une quelconque des revendications 11 à 15, où l'agent de formation de pores se présente sous la forme de microbilles sphériques présentant un diamètre moyen compris entre 1 et 10 µm environ.

17. Procédé selon l'une quelconque des revendications 11 à 16, où l'agent de formation de pores est ajouté en une quantité comprise entre 10 et 40 % en volume.

18. Procédé selon l'une quelconque des revendications 11 à 17, où ladite zircone stabilisée par yttria est une zircone entièrement stabilisée par yttria, présentant une teneur en yttria comprise entre 8 et 14 % en poids.

19. Procédé selon l'une quelconque des revendications 11 à 18, où le mélange pulvérulent contient également des particules pulvérulentes fines non agrégées d'une poudre inorganique résistante aux hautes températures, en particulier des particules fines d'hafnie.

20. Procédé selon la revendication 19, où les particules pulvérulentes fines présentent un diamètre compris entre 0,1 et 10 µm environ, de préférence compris entre 0,3 et 1,0 µm environ.

21. Procédé selon la revendication 19 ou 20, où les particules pulvérulentes fines comprennent un ou plusieurs des éléments HfO₂, Al₂O₃, V₂O₅.

22. Procédé selon l'une quelconque des revendications 19 à 21, contenant des particules pulvérulentes fines en une quantité comprise entre environ 1 et 10 % en volume.

23. Procédé selon l'une quelconque des revendications 11 à 22, comprenant, après l'étape de broyage :
- une étape de séchage, en particulier une étape de séchage sous vide ;
- une étape de pressage, en particulier une étape de pressage sous vide ;
- une étape de brûlage ;
- une étape de frittage.
